Europäisches Patentamt

(19) European Patent Office    (11) Publication number: **0 021 647**

Office européen des brevets    **B1**

(12) **EUROPEAN PATENT SPECIFICATION**

(45) Date of publication of patent specification: **26.01.83**    (51) Int. Cl.³: **B 60 T 7/06**

(21) Application number: **80301859.7**

(22) Date of filing: **04.06.80**

(54) An operating mechanism for an hydraulic cylinder.

(30) Priority: **12.06.79 GB 7920395**

(43) Date of publication of application:
**07.01.81 Bulletin 81/1**

(45) Publication of the grant of the patent:
**26.01.83 Bulletin 83/4**

(84) Designated Contracting States:
**BE DE FR GB IT NL SE**

(56) References cited:
**DE - B - 1 455 682**
**DE - U - 7 032 726**
**DE - U - 7 236 827**
**FR - A - 1 418 958**
**GB - A - 1 434 290**
**US - A - 3 048 980**

(73) Proprietor: **FORD MOTOR COMPANY LIMITED**
**Eagle Way**
**Brentwood Essex CM13 3BW (GB)**
㊤ **BE GB IT NL SE**
(73) Proprietor: **FORD-WERKE AKTIENGESELLSCHAFT**
**Ottoplatz 2 Postfach 21 03 69**
**D-5000 Köln 21 (DE)**
㊤ **DE**
(73) Proprietor: **FORD FRANCE SOCIETE ANONYME**
**344 Avenue Napoléon Bonaparte B.P. 307**
**F-92506 Rueil Malmaison Cedex (FR)**
㊤ **FR**

(72) Inventor: **Pardy, Ronald Peter**
**159 Maldon Road**
**Tiptree, Essex (GB)**

(74) Representative: **Drakeford, Robert William et al,**
**Ford Motor Company Limited Research &**
**Engineering Centre, 15/448 Laindon**
**Basildon Essex SS15 6EE (GB)**

Courier Press, Leamington Spa, England.

An operating mechanism for an hydraulic cylinder

This invention relates to operating mechanisms for devices such as hydraulic cylinders in particular to operating mechanisms for motor vehicle brake master cylinders.

Conventional motor vehicle brake master cylinders are operated by a pedal lever mounted for pivotal movement by an operator between a rest position and an engaged position. The pedal is connected to the hydraulic cylinder by a link which is reciprocable in the plane of movement of the lever. The connection between the link and the lever usually comprises a clevis on the lever which is connected to a tongue or clevis on the link by means of a pivot pin which lies transversely to the plane of movement of the lever, the pin being held in place by a split pin. British patent specification GB - A - 1 434 290 discloses a brake pedal assembly in which the tongue and clevis arrangement is replaced by abutments on the link and lever which engage each other when the lever is moved towards the engaged position.

Although such constructions are usually fully effective, errors in assembly of failure of the components of the connection can lead to the lever and link becoming detached from each other. The occurence of such an event during the use of a vehicle could endanger the safety of the occupants of the vehicle.

According to the present invention there is provided an operating mechanism for an hydraulic cylinder comprising a lever adapted to be mounted for pivotal movement by an operator between a rest position and an engaged position, and a link adapted for connection at one end to a piston in the hydraulic cylinder and connected at the other end to the lever for reciprocation by the lever in the plane of movement of the lever, the connection between the link and the lever comprising an abutment on the lever which engages an abutment on the link when the lever moves in a direction from the rest position towards the engaged position, characterised by a slidable coupling for retaining the abutments in alignment when separated from each other by an amount equal to or greater than the distance through which the abutment on the lever travels when the lever is moved between the rest and engaged positions.

By avoiding the use of the pivot pins in the connection between the lever and the link the risk of failure of the operating mechanism is reduced. Moreover, since the sliding connection is capable of maintaining the abutments in alignment even when separated by an amount greater than the travel of the lever, the link cannot become detached from the lever.

Preferably the slidable coupling between the link and lever comprises a shaft on one, and an aperture in the other through which the shaft projects. The shaft desirably forms part of the link and in the preferred embodiment of the invention comprises a projection extending towards the lever and through an aperture in the lever so that when the abutments are in engagement the pin projection extends into the mouth of the aperture by an amount equal to or greater than the distance through which the aperture travels when the lever is moved between the rest and engaged positions.

Usually the lever will be biased against movement towards the engaged position.

If desired, the shaft may carry a further abutment for example in the form of a circlip, which is engaged by the lever when the lever is returned to the rest position, thus ensuring that the link always follows closely the movement of the lever even when the lever is suddenly moved into its rest position.

The link will preferably be biased towards the rest position of the lever so that the abutments on the lever and link are in engagement during travel of the lever from the engaged position towards the rest position. In order to ensure that the abutments on the lever and link are in engagement even in the rest position of the lever, the mechanism preferably includes a stop with which the lever engages in the rest position, and which biases the lever towards the engaged position. Where the operating mechanism of the invention is used for the control of a motor vehicle brake master cylinder, the stop is preferably in the form of a brake warning light switch.

The invention specifically provides an hydraulic cylinder assembly comprising an hydraulic cylinder, a piston reciprocable within the said cylinder between a first and second position and being biased towards the first position, and an operating linkage according to the invention in which the link is connected at the said one end to the piston to move the piston out of the first position when the lever is moved towards the engaged position.

A preferred embodiment of the invention will now be described, by way of example only, with reference to the drawings, in which:—

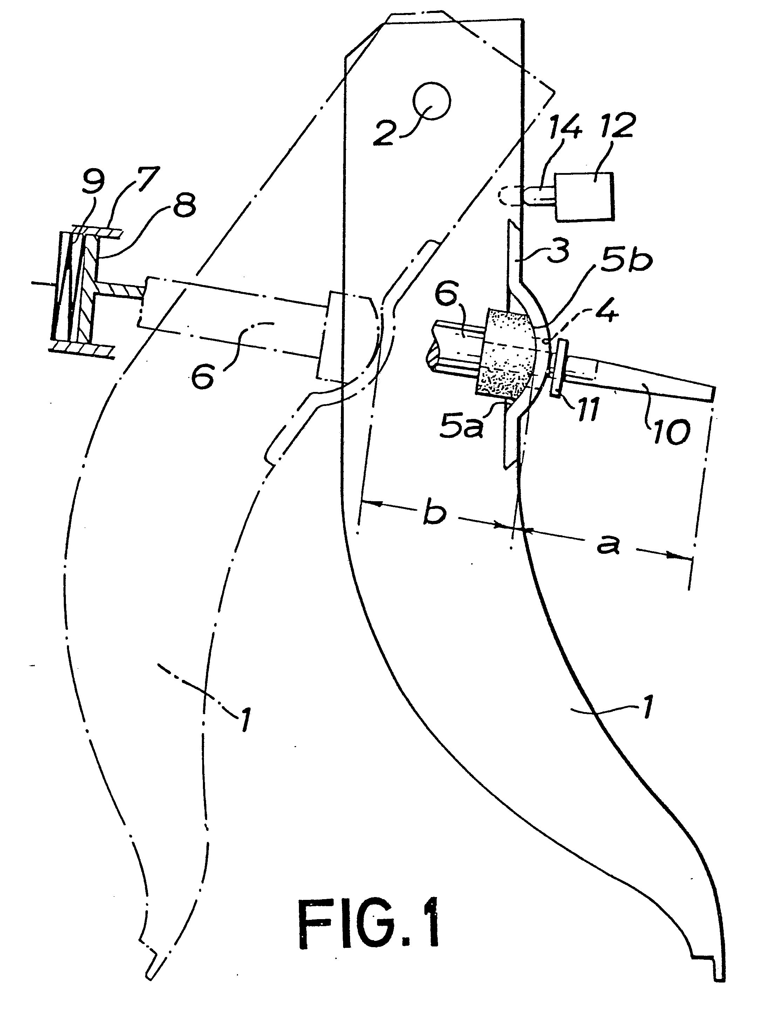

Figure 1 is a schematic side view of an embodiment of the operating mechanism of the invention; and

Figure 2 is a partial end view of the mechanism of Figure 1 taken along the line II—II.

The operating mechanism illustrated in the drawings is designed specifically for a motor vehicle brake master cylinder. The invention can however be used in other applications, for example for operating other types of hydraulic cylinders in motor vehicles or elsewhere.

Referring to the drawings, the operating mechanism comprises a lever 1 in the form of a pedal mounted at its upper end for pivotal movement about a transverse pivot pin 2 between a rest position illustrated in full lines and an engaged position, illustrated in broken lines. The pedal 1 is biased against movement towards the engaged position by means of a coil spring (not shown) of conventional construction acting about the pivot pin 2.

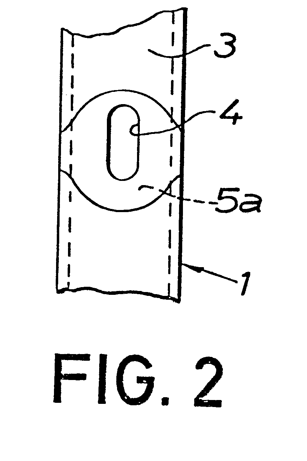

A flange 3 formed is on the rear edge of the pedal 1 and, as best seen in Figure 2, is provided with an elongated aperture 4. The flange 3 is shaped to form a recess, the forwardly facing surface 5a of which acts as an abutment surface and engages with a complementarily shaped abutment 5b on a link 6 which interconnects the pedal 1 with the piston of an hydraulic brake master cylinder indicated schematically at 7, of conventional construction. This cylinder includes a piston 8 which is connected directly to the link 6 reciprocable within the cylinder between a first position, corresponding to the rest position of the pedal 1, and a second position, corresponding to the engaged position of the pedal 1, and a second position, corresponding to the engaged position of the pedal 1. A spring 9 within the cylinder biases the piston into the first position.

The link 6 is in the form of a rod and the surface 5 is formed by a bush of plastics material. e.g. nylon. A shaft 10 in the form of a smooth pin extends from the end of the link 6 in a direction away from the engaged position of the pedal 1 and passes through the aperture 4. A spring circlip 11 is mounted in a circumferential groove on the shaft 10 adjacent the rearwardly facing wall of the flange 3. The shaft 10 extends into the aperture 6 by an amount $a$ which is at least equal to the distance $b$ through which the aperture 6 travels when the pedal 1 is moved between the rest and engaged positions.

A brake warning light switch 12 having a spring loaded contact 14 is mounted adjacent the upper end of the pedal 1 for operation by the pedal when the pedal is in the rest position.

In use, movement of the pedal towards the engaged position against the bias of the coil spring about the pivot pin 2 is transferred to the link 6 by virtue of the engagement between the abutment surfaces 5a and 5b on the flange 3 and the bush carried by the link 6, the link is therefore reciprocated in the plane of movement of the pedal 1 and causes the piston 8 to reciprocate in the cylinder 7 thus pressurising the hydraulic brake system. The elongation of the aperture 4 accommodates the relative movement of the shaft 10 and the pedal 1 during the travel of the pedal 1.

When the pedal 1 is released, the pedal returns to its rest position under the influence of the coil spring, allowing the piston 8 and the link 6 to move towards the rest position of the pedal 1 under the influence of the spring 9. Throughout this movement the abutment surfaces 5a and 5b will be held in engagement with each other. If the pedal 1 is suddenly released, for example in the event of the operator's foot slipping from the brake, the rearwardly facing wall of the flange 3 will engage with the circlip 11 thus ensuring that the link 6 always follows the movement of the pedal 1.

If the circlip 11 should have been inadvertently omitted during assembly, or is accidentally removed from the shaft 10, the link 6 cannot become disengaged from the pedal 1 because the projection 10 extends beyond the rear surface of the flange 3 by an amount greater than the maximum travel of the aperture 4.

The warning light switch 12 acts as a stop for the pedal 1 as it returns to the rest position, and the small bias exerted on the pedal by the contact 14 ensures that the abutment surfaces 5a and 5b are in engagement when the pedal 1 is in the rest position.

## Claims

1. An operating mechanism for an hydraulic cylinder (7) comprising a lever (1) adapted to be mounted for pivotal movement by an operator between a rest position and an engaged position, and a link (16) adapted for connection at one end to a piston (8) in the hydraulic cylinder (7) and connected at the other end to the lever (1) for reciprocation by the lever in the plane of movement of the lever, the connection between the link and the lever comprising an abutment (5a) on the lever (1) which engages an abutment (5b) on the link (6) when the lever moves in a direction from the rest position towards the engaged position, characterised by a sliding coupling (10, 4) for retaining the abutments in alignment when separated from each other by an amount ($a$) equal to or greater than the distance ($b$) through which the abutment (5a) on the lever travels when the lever is moved between the rest and engaged positions.

2. A mechanism according to claim 1 wherein the sliding coupling between the link (6) and the lever (1) comprises a shaft (10) on one and an aperture (4) in the other through which the shaft (10) projects.

3. A mechanism according to claim 2 wherein the shaft (10) projects from the link (6) towards the lever (1) and through an aperture (4) in the lever such that, when the abutments (5a, 5b) are in engagement, the shaft (10) extends into the mouth of the aperture by an amount ($a$) equal to or greater than the distance ($b$) through which the aperture (4) travels when the lever (1) is moved between the rest and engaged positions.

4. A mechanism according to claim 3 wherein the shaft (10) carries a further abutment (11) engagable with the lever (1) when the lever is returning to the rest position.

5. A mechanism according to claim 4 wherein the further abutment comprises a circlip (11) around the shaft (10).

6. A mechanism according to any one of claims 1 to 5 wherein the lever (1) is biased against movement towards the engaged position.

7. A mechanism according to any one of claims 1 to 6 wherein the lever (11) engages a stop in the rest position which biases the lever towards the engaged position.

8. A mechanism according to any one of claims 1 to 7 wherein the link (6) is biased towards the rest position of the lever (1).

9. An hydraulic cylinder assembly comprising an hydraulic cylinder (7), a piston (8) reciprocable within the said cylinder between a first and second position and being biased towards the first position, and an operating linkage according to any one of claims 1 to 7 in which the link (6) is connected at the said one end to the piston (8) to move the piston out of the first position when the lever (1) is moved towards the engaged position.

10. An assembly according to claim 9 wherein the hydraulic cylinder (7) is a motor vehicle brake master cylinder and the lever (1) is a brake pedal.

**Revendications**

1. Mécanisme d'actionnement pour un cylindre hydraulique (7) comprenant un levier (1) propre à être monté de manière à pivoter à l'intervention d'un conducteur entre une position de repos et une position de serrage des freins, et une biellette (6) reliée à une extrémité à un piston (8) dans le cylindre hydraulique (7) et à l'autre extrémité, au levier (1), en vue d'être animée d'un mouvement de va-et-vient par le levier dans le plan de pivotement de celui-ci, la liaison entre la biellette et le levier comprenant une butée (5a) sur le levier (1) qui attaque une butée (5b) sur la biellette (6) lorsque le levier se déplace dans un sens allant de la position de repos vers la position de serrage, caractérisé par un accouplement coulissant (10, 4) destiné à retenir les butées en ligne lorsqu'elles sont séparées l'une de l'autre dans une mesure (a) égale ou supérieure à la distance (b) de laquelle la butée (5a) sur le levier se déplace lorsque le levier est déplacé entre sa position de repos et sa position de serrage des freins.

2. Mécanisme suivant la revendication 1, caractérisé en ce que l'accouplement coulissant entre la biellette (6) et le levier (1) comprend une broche (10) sur un des éléments et une ouverture (4) dans l'autre que la broche (10) traverse.

3. Mécanisme suivant la revendication 2, caractérisé en ce que la broche (10) fait saillie à partir de la biellette (6) vers le levier (1) et à travers une ouverture (4) prévue dans le levier de telle sorte que, lorsque les butées (5a, 5b) sont en contact, la broche (10) s'étend dans l'embouchure de l'ouverture dans une mesure (a) égale ou supérieure à la distance (b) que l'ouverture parcourt lorsque le levier (1) est déplacé entre sa position de repos et sa position de serrage.

4. Mécanisme suivant la revendication 3, caractérisé en ce que la broche (10) porte une autre butée (11) pouvant être engagée avec le levier (1) lorsque ce levier revient dans sa position de repos.

5. Mécanisme suivant la revendication 4, caractérisé en ce que l'autre butée comprend un jonc d'arrêt élastique (11) autour de la broche (10).

6. Mécanisme suivant l'une quelconque des revendications 1 à 5, caractérisé en ce que le levier (1) est rappelé élastiquement dans un sens l'écartant de sa position de serrage.

7. Mécanisme suivant l'une quelconque des revendications 1 à 6, caractérisé en ce que le levier (1) attaque un arrêt dans la position de repos qui rappelle le levier élastiquement vers sa position de serrage.

8. Mécanisme suivant l'une quelconque des revendications 1 à 7, caractérisé en ce que la biellette (6) est sollicitée vers la position de repos du levier (1).

9. Montage de cylindre hydraulique comprenant un cylindre hydraulique (7), un piston (8) pouvant coulisser en un mouvement de va-et-vient dans le cylindre entre une première et une seconde position et rappelé élastiquement vers la première position, et une liaison mécanique d'actionnement suivant l'une quelconque des revendications 1 à 7, caractérisé en ce que la biellette (6) est reliée à sa première extrémité au piston (8) pour déplacer le piston à partir de la première position lorsque le levier (1) se déplace vers sa position de serrage.

10. Montage suivant la revendication 9, caractérisé en ce que le cylindre hydraulique (7) est un maître cylindre de freins de véhicule à moteur et le levier (1) est une pédale de freins.

**Patentansprüche**

1. Betätigungsmechanismus für einen Hydraulikzylinder (7), bestehend aus einem durch einen Betätiger zwischen einer Ruhestellung und einer Eingriffstellung schwenkbar zu lagernden Hebel (1) und einem an einem Ende mit einem Kolben (8) im hydraulischen Zylinder (7) verbindbaren und am anderen Ende mit dem Hebel (1) verbundenen Gestänge (6) zur Hin- und Herbewegung des Hebels in seiner Bewegungsebene, wobei die Verbindung zwischen dem Gestänge und dem Hebel aus einer bei Bewegung des Hebels aus der Ruhestellung zur Eingriffstellung hin mit einer Schulter (5b) auf dem Gestänge (6) in Eingriff kommenden Schulter (5a) auf dem Hebel (1) besteht, gekennzeichnet durch eine Schleifkupplung (10, 4), welche die Schultern ausgerichtet hält, wenn sie um einen gleichen oder grösseren Betrag (a) als die Weglänge (b) der Schulter (5a) auf dem Hebel bei dessen Bewegung zwischen der Ruhe- und Eingriffstellung voneinander getrennt sind.

2. Mechanismus nach Anspruch 1, worin die Schleifkupplung zwischen dem Gestänge (6) und dem Hebel (1) aus einer Welle (10) auf dem einen und einer Oeffnung (4), durch welche die Welle (10) vorsteht, in dem anderen besteht.

3. Mechanismus nach Anspruch 2, worin die Welle (10) vom Gestänge (6) zum Hebel (1) und durch eine Oeffnung (4) im Hebel so vorsteht, dass, mit den Schultern (5a, 5b) in Eingriff, die Welle (10) sich in die Mündung der Oeffnung um einen Betrag (a) erstreckt, der gleich oder grösser ist als der Abstand (b), über welchen sich die Oeffnung bei Bewegung des Hebels (1) zwischen der Ruhe- und Eingriffstellung bewegt.

4. Mechanismus nach Anspruch 3, worin die Welle (10) eine weitere Schulter (11) trägt, die bei Rückkehr des Hebels (1) in die Ruhestellung mit dem Hebel in Eingriff kommen kann.

5. Mechanismus nach Anspruch 4, worin die weitere Schulter aus einem Sprengring (11) um die Welle (10) besteht.

6. Mechanismus nach einem der Ansprüche 1 bis 5, worin der Hebel (1) gegen eine Bewegung zur Eingriffstellung hin vorgespannt ist.

7. Mechanismus nach einem der Ansprüche 1 bis 6, worin der Hebel (1) in Ruhestellung mit einem Anschlag in Eingriff kommt, welcher den Hebel zur Eingriffstellung hin vorspannt.

8. Mechanismus nach einem der Ansprüche 1 bis 7, worin das Gestänge (6) zur Ruhestellung des Hebels (1) hin vorgespannt ist.

9. Hydraulikzylinderbaugruppe, bestehend aus einem Hydraulikzylinder (7), einem innerhalb dieses Zylinders zwischen einer ersten und zweiten Stellung hin und her bewegbaren und zur ersten Stellung hin vorgespannten Kolben (8) und einer Betätigungsverbindung nach einem der Ansprüche 1 bis 7, worin das Gestänge (6) am besagten einen Ende mit dem Kolben (8) verbunden ist, um diesen bei Bewegung des Hebels (1) zur Eingriffstellung hin aus der ersten Stellung herauszubewegen.

10. Baugruppe nach Anspruch 9, worin der Hydraulikzylinder (7) ein Kraftfahrzeughauptbremszylinder und der Hebel (1) ein Bremspedal ist.

FIG.1

0 021 647

# FIG. 2